# EUROPÄISCHE PATENTSCHRIFT

(11) **EP 0 700 923 B1**
(45) Veröffentlichungstag und Bekanntmachung des Hinweises auf die Patenterteilung: **08.03.2000**
(21) Anmeldenummer: 95113288.5
(22) Anmeldetag: 24.08.1995
(51) Int. Cl.: C07F 9/165, C07F 9/02

(54) **Stabilisierte Dithiophosphorsäuredisulfide**
Stabilised dithiophosphoric acid disulphides
Disulfures dithiophosphoriques stabilisés

(30) Priorität: 06.09.1994 DE 4431729
(43) Veröffentlichungstag der Anmeldung: 13.03.1996
(73) Patentinhaber: RHEIN CHEMIE RHEINAU GmbH, 68204 Mannheim (DE)
(72) Erfinder: Schulz, Hartmut, Dr., D-69121 Heidelberg (DE); Schaefer, Volker, Dr., D-67122 Altrip (DE); Schweiger, Manfred, D-68642 Buerstadt (DE); Graf, Hans-Joachim, Dr., D-68219 Mannheim (DE); Steger, Lothar, Dr., D-81545 München (DE); Schmidt, Erich, D-68642 Buerstadt (DE)
(74) Vertreter: Feldhues, Michael L.F., Dr.

(56) Entgegenhaltungen:
- US-A- 4 496 495
- US-A- 5 208 362
- J. APPL. POLYM. SCI. (JAPNAB);75; VOL.19 (3); PP.865-77, UNIV. ASTON;DEP. CHEM.; GOSTA GREEN/BIRMINGHAM; ENGL. Pimblott J G*** et al 'Bis(diisopropyl)thiophosphoryl disulfide in cis-1,4-polyisoprene vulcanization reactions. I. As a sulfur donor'
- KAUTSCHUK UND GUMMI - KUNSTSTOFFE, Bd.46, Nr.2, 1993, HEIDELBERG DE Seiten 125 - 128 T. BISWAS 'Vulcanization of Carboxylated Nitrile Rubber: A New Way with Bis(diisopropyl)thiophosphoryl Disulfide'
- PLAST., RUBBER COMPOS. PROCESS. APPL. (PRPAEP,09598111);93; VOL.20 (3); PP.179-184, RUBBER RES. INST.;PIASTOW; 05-820; POL. (PL) PYSKLO L 'Mechanism of the vulcanization of cis-1,4-polyisoprene with mixtures of bis(diisopropyl)thiophosphoryl disulfide and dithiodimorpholine'
- CHEMICAL ABSTRACTS, vol. 079, no. 10, 10. September 1973, Columbus, Ohio, US; abstract no. 061078, TRDLICKA V ET AL 'Thermal stability of some dithiophosphoric acid derivatives' & CHEM. PRUM. (CHPUA4);73; VOL.23 (5); PP.238-40, VYS. SK. CHEMICKOTECHNOL.;PRAGUE; CZECH.

## Beschreibung

Dithiophosphorsäuredisulfide sind bekannt, ebenso ihre Anwendung als Vulkanisationsbeschleuniger für die Kautschukvulkanisation (vgl. Kautschuk und Gummi; Kunststoffe 2 (1993), 125; J. Appl. Polym. Sci. 19 (1975) 865; Plast., Rubber Compos. Process. Appl.; 93; Vol. 20(3) DE-OS 2 223 000). In der Vergangenheit wurden in erster Linie Derivate auf Basis kurzkettiger Alkohole eingesetzt. Vor allem das feste Isopropyldithiophosphoryldisulfid hatte eine große Bedeutung. Da es schwierig ist, die Richtwerte für Nitrosamine in der Luft bei der Kautschukvulkanisation einzuhalten, besteht besonderes Interesse an Kautschukhilfsmitteln, die vulkanisationsaktiv sind aber keine gefährlichen Zersetzungsprodukte, insbesondere keine Nitrosamine bilden.

Dithiophosphorsäuredisulfide können hergestellt werden durch Oxidation aus den entsprechenden freien Dithiophosphorsäuren mit Wasserstoffperoxid. Sie stellen gelbe Öle dar, die einen unangenehmen Geruch besitzen und die sich - insbesondere bei Anwesenheit von Wasser - leicht unter Abspaltung von Schwefelwasserstoff zersetzen.

Die Dithiophosphorsäuredisulfide entsprechen der Formel 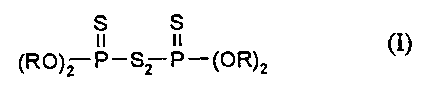 in der
- R: ein C₁-C₂₀-Alkylrest, ein Cycloalkylrest, ein Arylrest oder ein Aralkylrest ist.

Bevorzugt ist R ein C₄-C₈-Alkylrest.

Gegenstand dieser Erfindung sind durch einen Zusatz von 1 bis 20 Gew.-% einer Monocarbonsäure der Formel R'COOH mit R' C₁-C₂₀-Alkyl, Cycloalkyl, Aryl oder Aralkyl und 1 bis 20 Gew.-% Calciumoxid oder Zinkoxid, jeweils bezogen auf die Mischung gegen thermische und hydrolytische Zersetzung stabilisierte Dithiophosphorsäuredisulfide der Formel (I).

Die stabilisierten Produkte sind hellgelbe fast geruchlose Öle, die auch im wäßrigen Medium und in der Wärme keine Zersetzung erleiden.

Die stabilisierenden Carbonsäure und Oxide können den Dithiophosphorsäuredisulfiden in beliebiger Weise zugefügt werden. Bevorzugt setzt man sie unmittelbar nach der Herstellung zu und bevorzugt wendet man sowohl Carbonsäuren als auch Metalloxide an. Dabei ist es wieder bevorzugt zuerst die Carbonsäure und dann das Metalloxid zuzusetzen.

Bevorzugte stabilisierte Dithiophosphorsäuredisulfide sind z.B. 2-Di(3,3-dimethyl)butyldithiophosphorsäuredisulfid und Di-2-ethylhexyldithiophosphorsäuredisulfid, bevorzugte Carbonsäuren sind z.B. 2-Ethylhexansäure, n-Hexansäure, Kokospalmkernölfettsäure und das bevorzugte Metalloxid ist Zinkoxid. Die stabilisierenden Mengen der Carbonsäuren sind 1 bis 20 %, bevorzugt 1 bis 5 %, bezogen auf die Mischung und die Mengen der Metalloxide ebenfalls 1 bis 20, bevorzugt 1 bis 5 Gew.-%, bezogen auf die Mischung.

Die stabilisierten Dithiophosphorsäuredisulfide können in der gleichen Weise wie . nicht stabilisierte Produkte bei der Vulkanisation von Kautschuken eingesetzt werden, ohne irgendwelche Einbußen an Wirksamkeit. Die Vorteile der stabilisierten Produkte liegen in ihrer Unempfindlichkeit gegen Hitze und Wasser, der deutlich geringeren Geruchsbelästigung und vor allem in der zuverlässigeren Dosierbarkeit.

### Beispiel

### Herstellung von stabilisiertem 2-Di(3,3-dimethyl)butyldithiophosphoryldisulfid:

320 g 2-Di(3,3-dimethyl)butyldithiophosphorsäure (MIBC-Dithiophosphorsäure) werden mit 48 g Wasserstoffperoxid (35 %ig in Wasser) langsam versetzt, wobei die Temperatur unter 55°C liegen muß. Nach beendeter Zugabe wird für ca. zwei Stunden bei 60°C nachgerührt. Zur Mischung werden 10 g 2-Ethylhexansäure und anschließend portionsweise 8 g ZnO zugegeben. Es wird für zwei Stunden bei ca. 70°C gerührt und danach das Wasser im Wasserstrahlvakuum bei ca. 70°C entfernt. Das Produkt wird über Kieselgur filtriert.
Ausbeute: ca. 330 g (quantitativ)
Aussehen: gelbes, wenig riechendes Öl

## Patentansprüche

1. Stabilisierte Dithiophosphorsäuredisulfide der Formel (I) 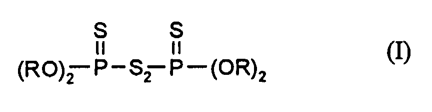 worin
R ein C₁-C₂₀-Alkyl-, ein Cycloalkyl-, ein Aryl- oder ein Aralkylrest ist,
enthaltend als Stabilisator 1 bis 20 Gew.-% einer Carbonsäure der allgemeinen Formel R'COOH, worin R' ein C₁-C₂₀-Alkylrest, ein Cycloalkylrest, ein Arylrest oder ein Aralkylrest ist und 1 bis 20 Gew.-% Calciumoxid oder Zinkoxid.

## Claims

1. Stabilised dithiophosphoric acid disulfides of the formula (I) 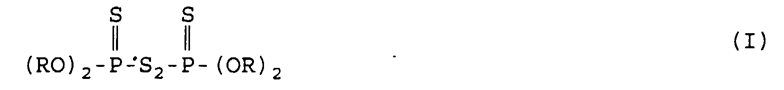 in which
R is a C₁-C₂₀ alkyl, cycloalkyl, aryl or aralkyl residue
containing as stabiliser 1 to 20 wt.% of a carboxylic acid of the general formula R'COOH, in which R' is a C₁-C₂₀ alkyl residue, a cycloalkyl residue, an aryl residue or an aralkyl residue, and 1 to 20 wt.% of calcium oxide or zinc oxide.

## Revendications

1. Disulfures d'acides dithiophosphoriques stabilisés de formule (I) 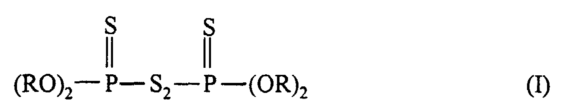 dans laquelle
R représente un groupe alkyle en C₁-C₂₀, cycloalkyle, aryle ou aralkyle, contenant en tant que stabilisants 1 à 20 % en poids d'un acide carboxylique de formule générale R'COOH, dans laquelle R' représente un groupe alkyle en C₁-C₂₀, cycloalkyle, aryle ou aralkyle et 1 à 20 % en poids d'oxyde de calcium ou d'oxyde de zinc.
